# EUROPEAN PATENT APPLICATION

(11) **EP 4 738 472 A1**
(43) Date of publication of application: **06.05.2026**
(21) Application number: 24306861.6
(22) Date of filing: 05.11.2024
(51) Int. Cl.: H01M 4/62, H01M 10/0525, H01M 10/0562

(54) **CARBON ADDITIVE WITH A MODIFICATION FOR OR IN A USE FOR A BATTERY'S ELECTRODE AND THE BATTERY**

(71) Applicant: TOYOTA JIDOSHA KABUSHIKI KAISHA, Aichi-ken, 471-8571 (JP)
(72) Inventor: CASTRO, Laurent, 1140 BRUSSELS (BE); GUEGUEN, Aurelie, 1140 BRUSSELS (BE); EL KAZZI, Mario, 5232 VILLIGEN PSI (CH); SILLER, Valerie, 5232 VILLIGEN PSI (CH); VIGNESH, Ramasamy Hari, 5232 VILLIGEN PSI (CH)
(74) Representative: Cabinet Beau de Loménie

(57) **Abstract**

Conductive carbon with a modification is used as a conductive additive of a composite electrode for an all-solid-state battery, wherein the modification is a fluorination providing inorganic particles on a carbon surface.

## Description

### BACKGROUND OF THE INVENTION

### 1. Field of the invention

The present disclosure relates to a carbon additive with a modification, its use in an electrode and a related electrode and battery.

### 2. Description of Related Art

All-solid-state batteries are known. Typically, a positive electrode in such a battery is a composite of an electrode active material, a solid electrolyte, and a conductive additive. A known conductive additive is a carbon fiber, e.g., a vapor-grown carbon fiber, in particular the product VGCF-H (Vapor Grown Carbon Fiber) offered at www.resonac.com. Literature 2 shows modifying a vapor-grown carbon fiber with an oxidative acid treatment. Literature 1 shows X-ray photoelectron spectroscopy (XPS) observations on battery components.

WO 2022/033820 A1 teaches the fluorination of all-solid-state battery components with fluorocarbon compounds for improving battery performance and durability. The all-solid-state battery components addressed are cathode active, anode active, solid electrolyte materials, and a current collector material.

### Literature

Literature 1: Wu, X.; Villevieille, C.; Novák, P.; El Kazzi, M., Monitoring the chemical and electronic properties of electrolyte-electrode interfaces in all-solid-state batteries using operando X-ray photoelectron spectroscopy. Physical Chemistry Chemical Physics 2018, 20 (16), 11123-11129.
Literature 2: Figueiredo, J.L., Serp, P. (2001). Gasification and Surface Modification of Vapor-Grown Carbon Fibers. In: Biró, L.P., Bernardo, C.A., Tibbetts, G.G., Lambin, P. (eds) Carbon Filaments and Nanotubes: Common Origins, Differing Applications?. NATO Science Series, vol 372.

In an all-solid-state battery, the solid electrolyte is oxidized during a first battery charging leading to partial degradation of ionic conductivity in the battery (linked with battery cell performances). There is a demand for improved battery cell performance.

### SUMMARY

The object of the present invention is to allow an improvement in battery cell performance. The inventors found that mitigating the oxidation of the solid electrolyte in an all-solid-state battery is possible with a surface modification of a conductive carbon additive, e.g. a VGCF (vapor-grown carbon fiber), as a conductive additive in a composite electrode of the all-solid-state battery. Less oxidation of solid electrolytes in the all-solid-state battery's electrode and the possibility to incorporate more active material and use less solid electrolyte will lead to an increased energy density of the battery cell and are results of this finding. The invention is defined in the claims.

The additive according to or used according to the invention or contained in the composite electrode according to the invention is obtainable from a method of modifying a conductive carbon (e.g. a carbon fiber) comprising, converting a pristine conductive carbon into a conductive carbon with a modification. A particular example of a conductive carbon is a pristine carbon fiber obtainable by vapor-growth of a carbon fiber, e.g., the above-mentioned fiber VGCF-H.

The converting proceeds under a gas flow of a dry and non-oxidizing gas composed of one or more fluorination compound(s) being a fluoroalkane, in particular fluoroform or carbon tetrafluoride, or a nitrogen fluoride, in particular nitrogen trifluoride, and optionally an inert gas. A reactor and/or fluorination measures as shown in WO 2022/033820 A1, which is herewith incorporated by reference, may be used for the converting. Suitable conditions for the conversion comprise a temperature between 280°C and 480°C for 0.7 to 4.5 hours. The one or more fluorination compound(s) consist preferably of NF3 (nitrogen trifluoride, mp = -26.8°C). Particularly preferred for the converting is an atmosphere of nitrogen trifluoride (as flow gas) and a temperature between 250°C and 450°C, preferably between 350°C and 450°C, for 0.9 to 4.9 hours, preferably 0.9 to 1.5 hours and particularly preferably a non-pressurized gas flow.

The conversion is one for obtaining a conductive additive (i.e. preserving at least a significant extent of conductivity of the conductive carbon subjected to the conversion) preferably such that a fluoride-based surface passivation is at least partially added to a conductive carbon without changing the composition of the conductive carbon providing the surface in the conversion. In particular, the modification may be one based on physisorption of a material providing the surface passivation. The aforementioned conversion features may be confirmed by essentially unaffected or poorly affected binding energy peaks corresponding to C 1s in X-ray photoelectron spectroscopy (XPS) and/or particles on the surface in a scanning electron microscope (SEM) observation. SEM may be performed as in Literature 1, incorporated herewith by reference, to confirm the presence of the particles on the surface. Furthermore SEM/EDX (energy dispersive X-ray spectroscopy) may be used to observe the surface, e.g. with a device available under the trademark Zeiss ULTRA55 coupled with an EDX detector, to confirm the presence of the particles on the surface. XPS spectra can be measured on additives used according to the invention (i.e. also the additives contained in the composite electrode according to the invention) for C 1s, O1s, F 1s, and/or Si 2p allow calculating amounts in at% of the elements C, O, F and Si in a known manner and of which at least the presence of C and F is found on the surface of the additives. In the case of the additives used according to the invention origins of elements observable in XPS spectra may be as follows. An origin of C may be the conductive carbon subjected to a passivation like that shown in WO 2022/033820 A1. An origin of F may be the one or more fluorination compound(s) in the non-oxidizing gas used for the conversion. An origin of Si may be quartz or glass of reactor elements used in the above-mentioned passivation (conversion) method, in particular a glass frit carrying pristine conductive carbon (in particular as shown in WO 2022/033820 A1). An origin of O may be the quartz or glass of the reactor elements and/or an impurity in a gas stream with the one or more fluorination compound(s).

Preferably, in the additive, i.e. a conductive carbon with a modification, the modification is the presence of inorganic particles on a carbon fiber surface which are composed of elements comprising Si, O and F. The conductive carbon to be provided with the modification may be selected from at least one of carbon black, carbon nanotubes, graphene or a graphene product like graphite, a vapor-grown carbon fiber, and a product obtained from ball milling a vapor-grown carbon fiber. The carbon black may be that of CAS No: 1333-86-4, e.g. a commercial one like those with the product name C-NERGY^{™} SUPER C65 (www.imerys.com being indicated here for availability of this product), or Ketjen black (www.nouryon.com and www.fuelcellstore.com being indicated here for availability of such products). A further conductive carbon option is Vulcan XC-72 (CAS No. : 7439-88-5; www.fuelcellstore.com being indicated here for availability of this product). Graphene may be provided in an aggregated form like graphite. A particular preference is a Vapor Grown Carbon fiber VGCF (as such or ball milled) more preferably ball milled VGCF. The ball milling may favorably adjust size and exposure of a surface to a gas stream in the conversion into an additive used according to the invention or contained in the composite electrode according to the invention. Preferable parameters for the ball milling process are a) wt% of milling balls based on the weight of material subjected to the ball milling = 10 : 0.1 to 10 : 10, more preferably 10 : 0.25 to 10 : 0.35; b) a rotation speed of the ball mill (a typical ball mill for carbon additives for a battery) = 100 rpm to 500 rpm, more preferably 250 rpm to 350 rpm; c) a milling duration from 1h to 10 h, more preferably 4h to 6h. A fiber as the conductive carbon with the modification may be a vapor-grown carbon fiber with the modification. The carbon fiber may be obtained with the above method.

An X-ray photoelectron spectroscopy of the additive used according to the invention and/or contained in the composite electrode according to the invention may show peak intensities corresponding to 3 at% or more at a binding energy peak corresponding to F 1s and corresponding to 70 at% or more at a binding energy peak corresponding to C 1s. An X-ray photoelectron spectroscopy of the conductive carbon with a modification and a pristine conductive carbon from which it is obtainable may further show exemplary peak intensities as follows:

| peak/element | Pristine conductive carbon [at%] | conductive carbon with a modification [at%] | preferable conductive carbon with a modification [at%] |
|---|---|---|---|
| C 1s | 93 - 96 | 70 - 93 | 70 - 93 |
| O 1s | 4 - 6.5 | 0 - 12 | 8 - 10.5 |
| F 1s | 0.3 - 0.7 | 3 - 12 | 6 - 10.5 |
| Si 2p | 0.0 - 0.05 | 0.0 - 12 | 3 - 10.5 |

The conductive carbon with the modification may be used as a conductive additive of a composite electrode for an all-solid-state battery or contained in this composite electrode, preferably in an amount of at most 10 wt%, e.g. 5 wt% to 10 wt%, more preferably 7 wt% to 10 wt%, based on the total weight of the composite electrode.

A composite electrode for an all-solid-state battery may comprise an electrode active material, a solid electrolyte, and the additive used according to the invention. The composite electrode is preferably a positive electrode or a working electrode. An all-solid-state battery may comprise the composite electrode according to the invention. Specifically, the all-solid-state battery may be formed of a layer of a solid electrolyte, preferably the same solid electrolyte material as that in the composite electrode, of a thickness of 10 µm to 1000 µm, more preferably 400 µm to 600 µm, this layer of the solid electrolyte being stacked between a metal layer of e.g. In/Li or Li and of a thickness of preferably 20 µm to 150 µm, more preferably 80 µm to 120 µm, and a layer being the composite electrode according to the invention and preferably of a thickness of 10 µm to 1000 µm, more preferably 50 µm to 900 µm, still more preferably 400 µm to 600 µm. The solid electrolyte may be Lithium polysulfide (LPS).

### BRIEF DESCRIPTION OF THE DRAWINGS

Features, advantages, and technical and industrial significance of exemplary additives of or for the invention will be described below with reference to the accompanying drawing, wherein:
- FIG. 1 shows a schematic illustration of a composite electrode according to the invention,
- FIG. 2 shows a micrograph of a conventional additive in a composite electrode,
- FIG. 3 shows cycling voltammetry (CV) measurement results of non-modified and modified carbon additives for a composite electrode, and
- FIG. 4 shows XPS observations with pristine and modified carbon fibers.

### DETAILED DESCRIPTION OF EMBODIMENTS

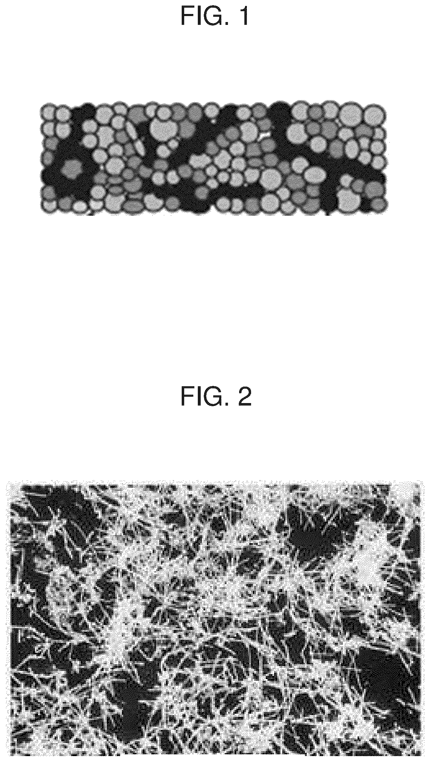

FIG. 1 shows a schematic illustration of a composite electrode according to the invention with dark regions of surface-modified conductive carbon as a composite electrode additive, shaded regions of electrode active material, fairly shaded regions of solid electrolyte, and obtained by mixing and pressing materials for these regions (additive, electrode active material and solid electrolyte).

As indicated in the section 'Experimental' of Literature 1 measurement cells have been prepared as stacks consisting of working electrode/solid electrolyte/counter electrode, i.e. solid electrolyte sandwiched by electrodes but in the working electrode the amount of carbon fiber was replaced with material from samples a VGCF (vapor grown carbon fiber) available from Resonac Europe GmbH, Wiesbaden, Germany, (https://eu.resonac.com) shown in FIG. 2 or surface-passivated samples of this VGCF from experiments 8 and 10 described below.

For surface-passivation, in experiments 1 to 10, the VGCF available from Resonac Europe GmbH was subjected to the method shown WO 2022/033820 A1 with CHF3 or NF3 as a fluorinating agent, respectively, with or without Ar, respectively, without further gases, and with treatment temperatures and times as indicated in Table 1 below.

XPS measurements as in Literature 1 were made on the obtained samples on those of experiments 8 and 10 also an SEM/EDX measurement as indicated above. The results are summarized in Table 1 below, as well. The SEM/EDX measurement confirmed the presence of silicon oxyfluoride particles on a carbon fiber surface.

**Table 1 - Summary of experiments 1 to 10 in a gas flow reactor:**

| | Reactive gas type | T [°C] | Time [h] | Analysis |
|---|---|---|---|---|
| 1 | CHF ₃ | 300 | 2 | XPS: Very little F increase |
| 2 | CHF ₃ | 550 | 2 | XPS: No F increase |
| 3 | Ar:NF₃ (1:1) | 200 | 1 | XPS: No F increase |
| 4 | Ar:NF₃ (1:1) | 250 | 1 | XPS: No F increase |
| 5 | Ar:NF₃ (1:1) | 300 | 1 | XPS: Very little F increase |
| 6 | Ar:NF₃ (1:1) | 320 | 1 | XPS: Very little F increase |
| 7 | Ar:NF₃ (1:1) | 300 | 4.5 | XPS: No F increase |
| 8 | Pure NF₃ | 400 | 1 | XPS: F increase, SEM/EDX: Si-O-F particles detected |
| 9 | Pure NF^{BATCH}₃ | 280 | 3 | XPS: Very little F increase |
| 10 | Pure NF₃ | 300 | 4 | XPS: F increase + Si, SEM/EDX: Si-O-F particles detected |

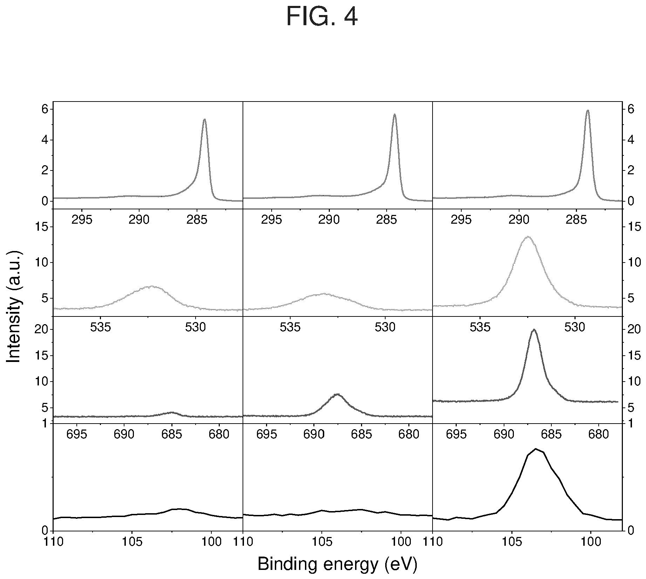

In a known manner element amounts in at% from XPS observations shown in FIG. 4 on the untreated VGCF and the samples from experiments 8 and 10 with results as shown in Table 2.

**Table 2:**

| peak/element | pristine carbon fiber [at%] /from Resonac | carbon fiber modified at 400°C, 1hour [at%] /experiments 8 | carbon fiber modified at 300°C, 4hours [at%] /experiments 10 |
|---|---|---|---|
| C 1s | 94.8 | 91.3 | 81.2 |
| O 1s | 4.7 | 3.9 | 8.5 |
| F 1s | 0.5 | 4.8 | 6.3 |
| Si 2p | 0.0 | 0.0 | 4.0 |

As derivable from these data for F 1s a passivation is obtained from the fluorinating agent treatment in experiment 8 and 10. These data for C 1s are consistent with essentially unaffected carbon-carbon bonds. These data for C 1s and F 1s are consistent with a surface modification and a fiber core at least essentially unaffected by the fluorination.

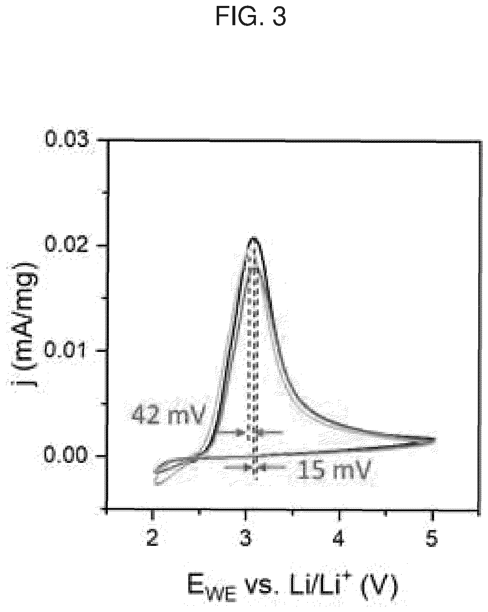

Capacity measurements against a potential referred vs. Li⁺/Li was performed on samples from experiments 8 and 10 with equipment and in line with protocols described in the section materials and methods of Y. Surace et al., Energy Storage Materials 44 (2022) 156-167, Evidence for stepwise formation of solid electrolyte interphase in the exchange of Li-ions, which is herewith incorporated by reference, but on samples from experiments 8 and 10 and on the untreated VGCF available from Resonac Europe GmbH, for the first cycle and with a constant voltage step of 50 µV/s in the cycling voltammetry (CV). Results are shown in FIG. 3, wherein the curve having the highest current density peak (j [mA/mg]) being that for the untreated VGCF, the curve having the lowest current density peak (j [mA/mg]) being that for sample 10 and the other curve being that for sample 8. Over-potential differences (between voltages at which the peaks are observed) are also indicated in FIG. 3.

The results of capacity measurements from FIG. 3 in the first battery cycle at the constant voltage step of 50 µV/s are shown in Table 3.

**Table 3:**

| | Pristine carbon fiber /from Resonac | carbon fiber modified at 400°C, 1hour /experiments 8 | carbon fiber modified at 300°C, 4hours /experiment 10 |
|---|---|---|---|
| C_{LPS} [mAh/g] | 86 | 81 | 77 |

Solid electrolyte oxidation could be confirmed to be limited to 5% for experiment 8 and 10.5% for experiment 10.

Although the present disclosure refers to specific exemplary additives, modifications may be provided to these examples without departing from the general scope of the invention as defined by the claims. In particular, individual characteristics of the different illustrated/mentioned embodiments may be combined in additional embodiments. Therefore, the description and the drawings should be considered in an illustrative rather than in a restrictive sense.

## Claims

1. A composite electrode for an all-solid-state battery, comprising an electrode active material, a solid electrolyte and an additive being conductive carbon with a modification,
wherein the modification is the presence of inorganic particles on a surface of conductive carbon which comprise F.

2. The composite electrode according to claim 1, wherein an amount of the additive is 10 weight-% or less of the total weight of the composite electrode.

3. The composite electrode according to claim 1 or 2, wherein the modification is obtainable by treatment of the surface of conductive carbon with a gas flow of a dry and non-oxidizing gas composed of one or more fluorination compound(s) being a fluoroalkane or a nitrogen fluoride and optionally an inert gas.

4. The composite electrode according to claim 3, wherein the dry and non-oxidizing gas is purified nitrogen trifluoride.

5. A composite electrode according to any of claims 1, 2, 3, and 4,
wherein the inorganic particles are composed of elements further comprising Si and/or O in addition to F.

6. The composite electrode according to any of claims 1, 2, 3, 4 and 5, wherein the conductive carbon is selected from at least one of carbon black, carbon nanotubes, a graphene product, a vapor-grown carbon fiber, and a product obtained from ball milling a vapor-grown carbon fiber.

7. The composite electrode according to any of claims 1, 2, 3, 4, 5 and 6, wherein an X-ray photoelectron spectroscopy of the carbon fiber shows peak intensities
corresponding 3 at% or more at a binding energy peak corresponding to F 1s and corresponding 90 at% or more at a binding energy peak corresponding to C 1s.

8. An all-solid-state battery comprising the composite electrode according to any of claims 1, 2, 3, 4, 5, 6 and 7.

9. A conductive additive for a composite electrode for an all-solid-state battery, the conductive additive consisting of conductive carbon with a modification,
wherein the modification is the presence of inorganic particles on a surface of conductive carbon which comprise F.

10. The conductive additive according to claim 9, wherein the modification is obtainable by
treatment of the surface of conductive carbon with a gas flow of a dry and non-oxidizing gas composed of one or more fluorination compound(s) being a fluoroalkane and/or a nitrogen fluoride and optionally an inert gas.

11. The conductive additive according to claim 9 or 10, wherein the dry and non-oxidizing gas is purified nitrogen trifluoride.

12. The conductive additive according to any of claims 9, 10, and 11, wherein inorganic particles are composed of elements further comprising Si and/or O in addition to F.

13. The conductive additive according to any of claims 9, 10, 11 and 12, wherein the conductive carbon is selected from at least one of carbon black, carbon nanotubes, a graphene product, a vapor-grown carbon fiber, and a product obtained from ball milling a vapor-grown carbon fiber.

14. The conductive additive according to any of claim 9, 10, 11, 12, and 13, wherein an X-ray photoelectron spectroscopy of the conductive carbon shows peak intensities
corresponding 3 at% or more at a binding energy peak corresponding to F 1s and
corresponding 70 at% or more at a binding energy peak corresponding to C 1s.

15. A use of the conductive additive according to any of claims 9, 10, 11, 12, 13, and 14, as a component for a composite electrode for an all-solid-state battery.

## Amended claims

### Amended claims in accordance with Rule 137(2) EPC.

1. A conductive additive for a composite electrode for an all-solid-state battery, the conductive additive consisting of conductive carbon with a modification,
wherein the modification is the presence of inorganic particles on a surface of conductive carbon which comprise F and are observable in a scanning electron microscope observation,
**characterized in that**
the modification is obtainable by treatment of the surface of conductive carbon with a gas flow of a dry and non-oxidizing gas composed of one or more fluorination compound(s) being a fluoroalkane and/or a nitrogen fluoride and optionally an inert gas.

2. The conductive additive according to claim 1, wherein the dry and non-oxidizing gas is purified nitrogen trifluoride.

3. The conductive additive according to claim 1 or 2, wherein inorganic particles are composed of elements further comprising Si and/or O in addition to F.

4. The conductive additive according to any of claims 1, 2, and 3, wherein the conductive carbon is selected from at least one of carbon black, carbon nanotubes, a graphene product, a vapor-grown carbon fiber, and a product obtained from ball milling a vapor-grown carbon fiber.

5. The conductive additive according to any of claim 1, 2, 3, and 4, wherein an X-ray photoelectron spectroscopy of the conductive carbon shows peak intensities
corresponding 3 at% or more at a binding energy peak corresponding to F 1s and corresponding 70 at% or more at a binding energy peak corresponding to C 1s.

6. A composite electrode for an all-solid-state battery, comprising an electrode active material and a solid electrolyte,
**characterized by**
further comprising the conductive additive according to any of claims 1, 2, 3, 4, and 5.

7. The composite electrode according to claim 6, wherein an amount of the additive is 10 weight-% or less of the total weight of the composite electrode.

8. An all-solid-state battery comprising the composite electrode according to claim 6 or 7.

9. A use of the conductive additive according to any of claims 1, 2, 3, 4, and 5 as a component for a composite electrode for an all-solid-state battery.
